# EUROPEAN PATENT SPECIFICATION

(11) **EP 3 863 141 B1**
(45) Date of publication and mention of the grant of the patent: **07.10.2026**
(21) Application number: 20155828.5
(22) Date of filing: 06.02.2020
(51) Int. Cl.: H02J 1/082, B60L 58/18, B60L 3/00, H02J 7/60

(54) **BATTERY SYSTEM**
BATTERIESYSTEM
SYSTÈME DE BATTERIE

(43) Date of publication of application: 11.08.2021
(73) Proprietor: Samsung SDI Co., Ltd., Gyeonggi-do 17084 (KR)
(72) Inventor: Fritz, Jürgen, 8020 Graz (AT); Pretschuh, Markus, 8055 Graz (AT)
(74) Representative: Gulde & Partner

(56) References cited:
- EP-A1- 2 993 074
- EP-A1- 3 316 440
- CN-A- 109 391 136
- CN-B- 104 827 921
- US-A1- 2019 359 081
- US-A1- 2019 372 381

## Description

### Field of the Invention

The present invention relates to a battery system, particularly a battery system with an improved control of battery actuators and with reduced cross-talk to a low voltage side of the battery actuators. The present invention further relates to a control unit for such a battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density. That is, the battery module is formed by interconnecting the electrode terminals of the plurality of battery cells depending on a required amount of power and in order to realize a high-power rechargeable battery. In general, one or more battery modules are mechanically and electrically integrated, equipped with a thermal management system and set up for communication with one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned information, a battery system usually comprises a battery management system, BMS. Such control unit may be integral with the battery system or may be part of a remote controller communicating with the battery system via a suitable communication bus. In both cases, the control unit communicates with the electrical consumers via a suitable communication bus, e.g. a CAN or SPI interface.

The BMS is usually coupled to the controller of one or more electrical consumers as well as to each of the battery modules of the battery system. Usually each battery module comprises a cell supervision circuit, CSC, that is configured to maintain the communication with the BMS and with other battery modules. The CSC may be connected to the battery cells directly or via a cell connecting unit, CCU, and may be configured to monitor cell voltages, currents and/or temperatures of some or each of the battery module's battery cells. The CSC may further actively or passively balance the voltages of the individual battery cells within the module.

Common battery modules further comprise battery actuators, such as e.g., relays, which are usually disposed in an internal or external unit that is configured to cut a connection of the battery system to an external load in case of a malfunction of the battery system. This unit may further comprise fuses, precharge resistors and control electronics and is often referred to as battery disconnect unit, BDU, or battery junction box, BJB. Each of the aforementioned control units may be realized as or at least comprise an integrated circuit (IC), a microcontroller (µC), an application specific integrated circuit (ASIC), or the like. Control units may be an integral part of the battery system and disposed within a common housing or may be part of a remote control module communicating with the battery system via a suitable bus.

In electric vehicles, an electric engine is usually supplied by a high voltage battery system, e.g. a 48 V battery system. The 48 V battery system is connected to a 48 V board net and is usually charged by a electric generator, e.g., a combined starter generator. The electric vehicles may further comprise a 12 V board net that is often used to power at least some of the aforementioned control units, at least the battery disconnect unit or battery junction box.

As a BDU or BJB comprises a plurality of battery actuators, the supply of all the battery actuators by the 12 V battery might lead to situations where a supply voltage is insufficient to maintain a non-conducting state for all the battery actuators. Further, if relays open unintendedly, an overcurrent might lead to destruction of battery actuators. Further, AC-attenuation of battery actuators is typically very low and hence cross-talk between the HV lines and the electric lines of a LV control circuitry might easily occur. Therein, coupling constants of coupling paths from a HV side to a low voltage, LV, side usually exceed those from a LV side to a HV side and hence control operations of the battery actuator might be negatively interfered by signals on the HV lines of the battery system. Particularly in a malfunctioning battery system, unusual signals might be generated on the HV side, increasing a risk in the LV control lines in situations where a reliable control is most required.

EP 2993074A1 discloses a battery pack that includes a main battery with a plurality of battery cells, a power conversion unit configured to change a level of a voltage output from the main battery, and a main relay unit disposed between the main battery and the power conversion unit, wherein the battery actuator control unit has one output node and two input nodes, one of which is connected to a ground and the other one to an intermediate node of the cell stack.

EP 3316440 A1 discloses a battery system with integrated balancing and a redundant power supply for control electronics of the battery system.

It is thus an objective of the present invention, to provide a battery system with an improved control of battery actuators and reduced cross-talk to the controls of the battery actuators.

### Description of the Invention

The objective of the invention is solved and the disadvantages of the prior art are overcome or at least reduced by the subject-matter of the present invention, in particular by a battery system and by a control unit for such battery system according to the appended claims.

According to a first aspect of the present invention, a battery system is provided, particularly a high voltage battery system for an electric vehicle, EV, or plug-in hybrid electric vehicle, PHEV. The battery system of the present invention comprises a battery cell stack that is formed of a plurality of battery cells that are connected in series and/or in parallel between a first stack node and a second stack node of the battery cell stack. The battery cells preferably are lithium ion battery cells and further preferred are prismatic battery cells. However, the battery cells can also be pouch type battery cells and/or battery cells of other chemistry. The battery cell stack is configured to supply a stack voltage, e.g., a high voltage of at least 48 V, preferably a high voltage of 100 V or more, to a first output node of the battery system (first system output node).

Particularly, the stack voltage applies between a first output node and a second output node of the battery system, wherein the second output node (second system output node) is at ground potential of the battery system. The first output node of the battery system is connected to the first stack node and preferably the second output node of the battery system is connected to the second stack node.

The battery system of the present invention further comprises a DCDC converter that is configured to receive a first output voltage of the battery cell stack and to down-convert the received first output voltage to a second output voltage. Therein, the first output voltage is a voltage that is equal to or less than the stack voltage of the battery cell stack. In other words, the DCDC converter receives a voltage output of some or all of the stacked battery cells. Preferably, the DCDC converter is connected between the first stack node and the second stack node. However other ways of connecting the DCDC converter to the stack are possible.

The battery system of the invention further comprises a battery actuator that is interconnected between the battery cell stack and one of the first system output node and the second system output node. The battery actuator is a component that is configured to be controlled to be either conductive or non-conductive. In other words, the battery actuator can be set to be either conductive or non-conductive with respect to an output voltage of the battery system, e.g., the stack voltage. The battery actuator can thus be used to separate the battery cell stack from a load connected thereto by cutting a conducting connection between the stack and a system output node.

The battery system of the present invention further comprises a battery actuator control unit that comprises a first input node for receiving the second output voltage, i.e., the downconverted voltage as outputted by the DCDC converter. The battery actuator control unit further comprises a second input node that is connected to the second stack node, i.e., that comprises the ground potential of the battery stack of the battery system. The battery actuator control unit of the battery system is configured to output a first switch signal to the battery actuator via a first output node and is configured to output a second switch signal to the battery actuator via a second output node. The battery actuator control unit is further configured to control the battery actuator by the first and second switch signals outputted thereto. In the context of the present invention, the first and second switch signals preferably are voltage levels that are applied to a circuit connecting the first and second output node.

In the battery system of the present disclosure, the battery actuators are advantageously not controlled by a low voltage, LV, circuitry that is power supplied by a low voltage battery. That is, any noise on the high voltage side of the battery system cannot couple to the low voltage side via the battery actuators. On the contrary in the battery system of the present invention, the battery actuator control unit is completely independent from a voltage level of any low voltage battery. Particularly, a ground potential applied to the battery actuator control unit is not a ground potential of an electric vehicle, such as e.g., the potential of a chassis of the electric vehicle, but is a ground potential of the high voltage battery system, which is usually above the ground potential of the electric vehicle as a whole and any low voltage battery system thereof. In other words, the voltage level at the second stack node is different, particularly preferred above, the voltage level of the low voltage ground (chassis). Put differently, the second stack node potential defines a ground voltage of battery system.

The battery system of the present disclosure thus advantageously allows to prevent malfunctions of the battery actuators due to voltage shortage, e.g., due to a cold cranking event or the like. Further, coupling between the high voltage side of the battery system, i.e., from the conducting lines controlled by the battery actuator, to the control circuitry of the battery actuator does not interfere anymore with the low voltage ground potential of the electric vehicle as a whole. Usually, coupling constants between the high voltage side of a battery system and the low voltage ground of an electric vehicle are high. By connecting the battery actuator control unit to the low voltage ground of the battery system via the DCDC converter, these coupling constants do not apply to the battery actuators anymore. Hence, coupling of AC perturbations into the low voltage domain of an electric vehicle is advantageously decreased. Particularly preferred, a converter with galvanic isolation is used in the battery system of the present disclosure for decreasing coupling of AC perturbations.

In a further preferred embodiment, the battery system of the present invention further comprises a low voltage battery that is charged by the second output voltage. Such low voltage battery is often disposed in electric or plug-in hybrid vehicles for power supplying security relevant functions of the electric vehicle, such as power steering, ABS or the like. By charging the low voltage battery by the second output voltage, the DCDC converter of the battery system is advantageously put to an additional use and hence redundancy in the battery system can be reduced. The output of the DCDC converter supplying the low voltage battery is preferably isolated from the output of the DCDC converter supplying the second output voltage to the battery actuator control unit. Further preferred, the low voltage battery is a 12 V battery. In such case preferably also the second output voltage is about 12 V. Also preferred, the stack voltage of the battery system is about 60 V, about 100 V or about 400 V.

In a further preferred embodiment of the present invention, the first output voltage is supplied to the DCDC converter by a fraction of the stacked battery cells. In such case, the DCDC converter is not interconnected between the first stack node and the second stack node but is rather connected between the second stack node and an intermediate node of the cell stack. Therein, the intermediate node divides the battery cell stack such that the fraction of battery cells supplying the DCDC converter is interconnected between the intermediate node and the second stack node. According to this embodiment, the first output voltage is below the stack voltage of the battery cell stack and hence advantageously the DCDC converter can be configured for a smaller degree of down-conversion, be dimensioned smaller and be lighter. Such embodiment is advantageous for any mobile application in any kind of electric vehicle.

Further preferred, the DCDC converter used in the battery system of this disclosure is one of a buck converter, a buck-boost-converter, a low-dropout regulator, a flyback converter, a forward converter and a push-pull-converter. The skilled person is aware of how to implement each of the aforementioned converter types as well as of their general advantages and disadvantages. Particularly preferred in the battery system of the present invention, a DCDC converter providing galvanic isolation, such as e.g., a forward converter, a flyback converter or a push-pull-converter, is used in order to further decouple the HV domain from any LV domain of the battery system, e.g., when the DCDC is also used for charging a LV battery.

In a preferred embodiment of the present invention, the DCDC converter comprises a first switch and an inductance that are interconnected in series between a converter input node (the first stack node) and a converter output node. The DCDC converter preferably further comprises a converter node that is disposed in between the first switch and the inductance as well as a second switch that is connected between the second stack node and the converter node. This design provides a simple DCDC converter with the required functionality.

In the battery system of the invention, the first switch signal and the second switch signal are different voltage levels, i.e., potentials, applied to a circuitry that is connecting the first output node and the second output node of the battery actuator control unit. Particularly, the first switch signal is on the voltage level of the second output voltage, i.e., the stepped-down voltage as output by the DCDC converter. Further, the second switch signal is on the voltage level of the second stack node, i.e., on the ground voltage level of the high voltage battery system. Thus, any influence on a low voltage ground potential via the battery actuator control unit can be avoided in the battery system of the present disclosure, hence providing the advantages as already described before, e.g., decreased AC coupling.

In a further preferred embodiment of the present invention, the battery actuator control unit comprises a high side driver that is interconnected between the first input node and the first system output node. According to this embodiment, the battery actuator control unit further comprises a low side driver that interconnected between the second input node and the second system output node. Particularly preferred, the high side driver and the low side driver are separated sub-circuits of the battery actuator control unit, particularly preferred they are separated integrated circuits. Further preferred, the high side driver and the low side driver are isolated from each other. Preferably the high side driver receives solely the second output voltage and the low side driver receives solely the voltage supplied by the second stack node (HV ground). In other words, the high side driver is isolated from the HV ground and the low side driver is isolated from the second output voltage supplied by the DCDC converter. However, the high side driver and the low side driver might also be realized as a single integrated circuit.

In a further preferred embodiment of the invention, the battery system comprises a first battery actuator that is interconnected between the first stack node and the first output node and a second battery actuator that is interconnected between the second stack node and the second output node. Therein, the first battery actuator and the second battery actuator are preferably main battery actuators that can be used to safely and reliably disconnect the battery cell stack from any downstream load, e.g., if the battery is malfunctioning. According to this embodiment, each of the first battery actuator and the second battery actuator is connected to the first output node and to the second output node. Preferably, the first battery actuator and second battery actuator are selectively connected to the first output node and to the second output node. In other words, none, one or both of the first and second battery actuators can be connected to the first and second output node, respectively. Also preferred, the first output node and the second output node comprise subnodes for connecting individually to the first battery actuator and the second battery actuator, respectively.

In a further preferred embodiment, the battery system of the present invention comprises a precharge battery actuator that is connected in series with a precharge resistor and that is connected in parallel to the second battery actuator together with the precharge resistor. In other words, the precharge battery actuator and the precharge resistor are disposed in a precharge conducting path that is connected parallel to the second battery actuator. In this embodiment, also the precharge battery actuator is connected to the first output node and to the second output node. Therein, the connection is either selectively or via subnodes of the first and second output node as described above with respect to the first and second battery actuator. The precharge battery actuator and the precharge resistor disposed together in the precharge conducting path advantageously allow limiting the current drawn from or charged to the battery system by limiting the current via the precharge resistor, particularly on turn on. By controlling also the precharge battery actuator via the battery actuator control unit of the battery system of the present disclosure, the redundancy in the battery system is reduced.

In a particularly preferred embodiment of the battery system according to the invention, the high side driver comprises a plurality of high side switches, wherein each of the high side switches is interconnected between the first input node and one of a plurality of battery actuators. In other words, each of the high side switches controls the conductivity (current flow) via an individual conducting path connecting the first input node, the respective high side switch and a respective battery actuator. In other words, the first output node can be considered to comprise each of these conducting paths as individual subnodes of the first output node. In this embodiment, the first switch signal is individually applied to each of the battery actuators with a simple circuitry and thus computational controlling effort is reduced.

Further, in this preferred embodiment, the low side driver comprises a plurality of low side switches, wherein each of the low side switches is interconnected between the second input node and one of a plurality of battery actuators. In other words, each of the low side switches controls the conductivity (current flow) via an individual conducting path connecting the second input node, the respective low side switch and a respective battery actuator. The second output node can thus be considered to comprise each of these conducting paths as individual subnodes of the second output node. In this embodiment, also the second switch signal (e.g., setting the battery actuators non-conductive) is individually applied to each of the battery actuators with a simple circuitry and thus computational control effort is reduced.

In a particularly preferred embodiment, the conductivity of each of the high side switches and each of the low side switches is individually controlled by a switch control circuit. In other words, the switch control circuit is configured to individually control the conductivity of each of the high side switches and each of the low side switches. Further preferred, the high side driver comprises a first switch control circuit configured to control the conductivity of each of the high side switches individually and the low side driver comprises a second switch control circuit configured to control the conductivity of each of the low side switches individually. Further preferred, the high side switches and/or the low side switches are transistor switches and preferably the high and/or the low side switches comprises IGBT or MOSFET transistors.

The battery actuators are preferably either a battery contactor or a relay. The battery contactors are preferably configured to be normally open, i.e., non-conducting, and can be advantageously connected directly to a load. The relays are configured either normally open or normally closed and can be easily set up for a variety of application within the system.

Another aspect of the present invention relates to a control unit for a battery system according to the invention as described above. Therein, the control unit comprises at least the DCDC converter and the battery actuator control unit as described above. The control unit hence comprises at least a first unit input node configured to receive the first output voltage of the battery cell stack and a second input node connected to the second stack node. The control unit also comprises at least one first unit output node to which the first switch signal applies and at least one second unit output node to which the second switch signal applies. The control unit of the present invention preferably is part of a battery disconnect unit, BDU, or a battery junction box, BJB. Preferred embodiments of the control unit according to the invention correspond to preferred embodiments of the battery system as described above.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media, e.g. a CD, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present invention.

Further aspects of the present invention are disclosed in the dependent claims or the following description of the drawings.

### Brief Description of the Drawings

Features will become apparent to those of ordinary skill in the art by describing in detail exemplary embodiments with reference to the attached drawings in which:
- Figure 1: illustrates a schematic circuit diagram of a battery system according to an embodiment;
- Figure 2: illustrates a schematic circuit diagram of a battery system according to another embodiment;
- Figure 3: illustrates a schematic circuit diagram of a battery system according to another embodiment;
- Figure 4: illustrates a schematic circuit diagram of a battery system according to another embodiment;
- Figure 5: illustrates a schematic circuit diagram of a battery system according to another example, not covered by the appended claims; and
- Figure 6: illustrates a timing diagram of the battery system as shown in Figure 4.

### Detailed Description of the Invention

Reference will now be made in detail to embodiments which are illustrated in the appended drawings. Effects and features of these embodiments, and implementation methods thereof will be described with reference to the appended drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity. As used herein, the term "and/or" includes any and all combinations of one or more of the associated listed items. Further, the use of "may" when describing embodiments of the present invention refers to "one or more embodiments of the present invention." In the following description of embodiments, the singular form may include plural forms unless the context clearly indicates otherwise.

It will be understood that if the terms "first" and "second" are used to describe elements, these elements are limited by these terms. These terms are only used to distinguish one element from another element. For example, a first element may be named a second element and, similarly, a second element may be named a first element, without departing from the scope of the invention. Expressions such as "at least one of," when preceding a list of elements, modify the entire list of elements and do not modify the individual elements thereof.

As used herein, the term "substantially," "about," and similar terms are used as terms of approximation and not as terms of degree, and are intended to account for the inherent deviations in measured or calculated values that would be recognized by those of skill in the art. If the term "substantially" is used in combination with a feature that could be expressed using a numeric value, the term denotes a range of +/- 5% of the value centered on the value.

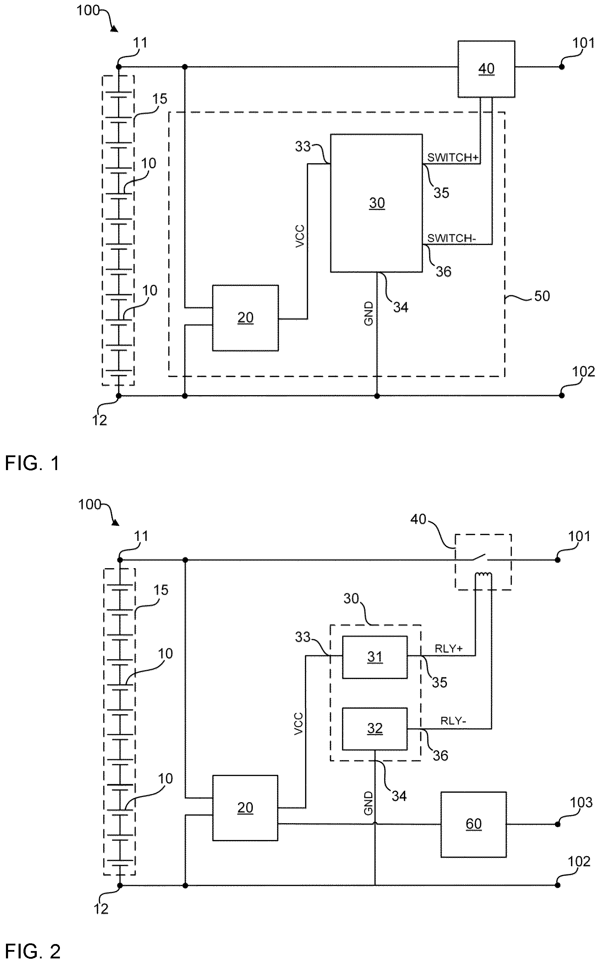

Figure 1 schematically illustrates a battery system 100 according to an embodiment of the invention. The battery system 100 comprises a plurality of battery cells 10 forming a battery cell stack 15 that is interconnected between a first stack node 11 and a second stack node 12. A stack voltage, e.g., 60 V, applies to the first stack node 11, while the second stack node 12 is at a ground potential GND of the battery system 100. For a battery system 100 disposed in an electric vehicle, this GND differs from a low voltage ground potential, e.g., of a chassis of the electric vehicle. In the battery system 100 of the invention, the first stack node 11 is connected to a first system output node 101 of the battery system 100 and the second stack node 12 is connected to a second system output node 102 of the battery system 100. A battery actuator 40 is interconnected between the first stack node 11 and the first system output node 101. The battery actuator 40 is a contactor or a relay configured to set a path between the first stack node 11 and the first system output node 101 to be either conductive or non-conductive.

The battery system 100 further comprises a control unit 50 that is connected to the battery stack 15, particularly to each of the first stack node 11 and the second stack node 12. The control unit 50 is further connected to the battery actuator 40. In Figure 1, the control unit 50 is illustrated by the dashed line and comprises a DCDC converter 20 and a battery actuator control unit 30. The DCDC converter 20 is connected to the first stack node 11 and to the second stack node 12 and thus receives the stack voltage as a first input voltage. The DCDC converter 20 is configured to down-convert the stack voltage to a second output voltage VCC of approximately 12 V. The DCDC converter 20 outputs the second output voltage to a battery actuator control unit 30 that receives it via a first input node 33. The battery actuator control unit 30 further has a second input node 34 that is connected to the second stack node 12 and receives the ground GND of the battery system 100. The battery actuator control unit 30 outputs a first switch signal SWITCH+ via a first output node 35 and a second switch signal SWITCH-via a second output node 36 to the battery actuator 40. The battery actuator control unit 30 receives only a ground GND of the high voltage battery system 100, i.e., the battery stack 15, but does not receive any low voltage ground voltage.

Figure 2 illustrates a schematic circuit diagram of a battery system 100 according to another embodiment not comprising a control unit but rather comprising the DCDC converter 20 and the battery actuator control unit 30 as separate hardware components. As illustrated in Figure 2, the battery actuator 40 is a relay that comprises a relay switch which is actuated, i.e., either closed (set conducting) or opened (set non-conducting), by a relay coil. As further illustrated in Figure 2, the battery actuator control unit 30 comprises a high side driver 31 and a low side driver 32. The high side driver 31 is interconnected between the first input node 33 and the first output node 35 and supplies a first switch signal RLY+ to a first terminal end of the relay coil. The low side driver 32 is interconnected between the second input node 34 and the second output node 36 and supplies a second switch signal RLY- to a second terminal end of the relay coil. The battery system 100 further comprises a low voltage battery 60, preferably a 12 V battery, that is also supplied, i.e., charged by the output voltage of the DCDC converter 20. The low voltage battery 60 supplies the low voltage of 12 V to a low voltage output node 103.

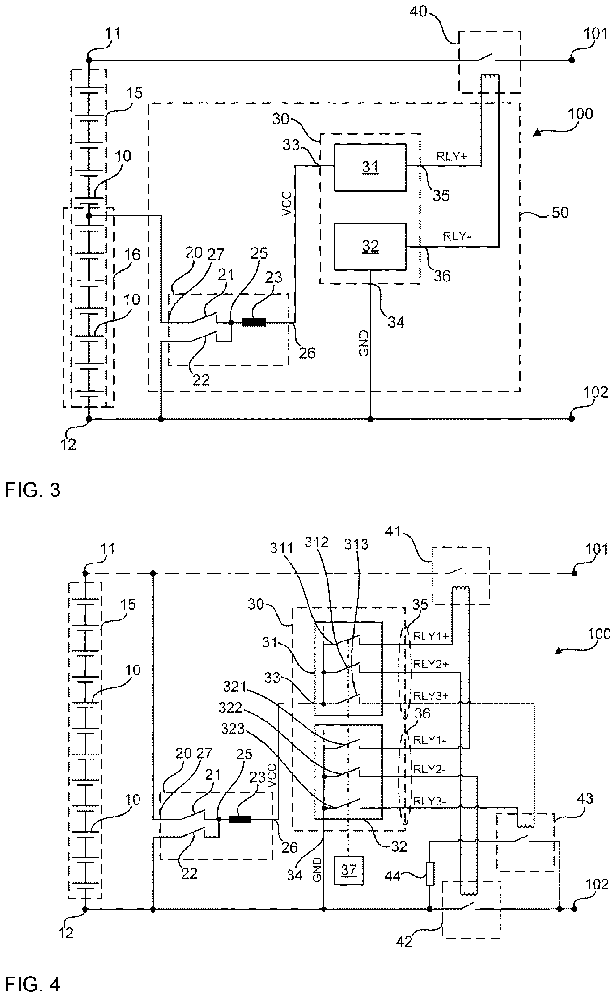

Figure 3 illustrates a schematic circuit diagram of a battery system 100 according to even another embodiment. Therein, the battery system 100 again comprises the control unit 50 indicated by the dashed line which is comprising a circuit carrier board on which the further components, i.e., DCDC converter 20 and battery actuator control unit 30, are surface mounted as integrated components. Further, in the battery system 100 of Figure 3 control unit 50 is not connected to the first stack node 11 but receives a first output voltage provided from a fraction 16 of the stacked battery cells 10 such that the first output voltage is below the stack voltage of the battery cell stack 15. Particularly, the DCDC converter 20 is connected to a high side of the fraction 16 of battery cells 10 via a first switching element 21 connected in series with an inductance 23 between a converter output node 26 and the battery cell fraction 16. Further, the DCDC converter 20 comprises a converter node 25 that is interconnected between the first switch 21 and the inductance 23 and that is connected to the second stack node 12 via a second switch 22. This allows for a simple implementation of the DCDC converter 20. The battery actuator control unit 30 is configured as already described with respect to Figure 2, i.e., with a high side driver 31 and a low side driver 32.

Figure 4 illustrates a schematic circuit diagram of a battery system 100 according to yet another embodiment. The battery system 100 comprises a first battery actuator relay 41 interconnected between the first stack node 11 and the first system output node 101, a second battery actuator relay 42 interconnected between the second stack node 12 and the second system output node 102 and a third battery actuator relay 43 connected in parallel with the second battery actuator relay 42 and connected in series with a precharge resistor 44. According to this embodiment, the high side driver 31 comprises a plurality of high side switches 311, 312, 313 and the low side driver 32 comprises a plurality of low side switches 321, 322, 323. Each of these switches 311, 312, 313, 321, 322, 323 is configured as a transistor switch, i.e., comprises at least one transistor. Further, each of these switches 311, 312, 313, 321, 322, 323 is configured to be individually set conductive or non-conductive by a signal received from a switch control circuit 37 (the dashed-dotted line in Figure 4).

Particularly, the first high side switch 311 is interconnected between the first input node 31 and the first output node 35 of the battery actuator control unit 30 and is configured to selectively apply the second output voltage VCC as first switch signal RLY1+ to the first battery actuator relay 41. Further, the first low side switch 321 is interconnected between the second input node 32 and the second output node 36 of the battery actuator control unit 30 and is configured to selectively apply the potential of the second stack node 12 as second switch signal RLY1- to the first battery actuator relay 41.

Further, the second high side switch 312 is interconnected between the first input node 31 and the first output node 35 of the battery actuator control unit 30 and is configured to selectively apply the second output voltage VCC as first switch signal RLY2+ to the second battery actuator relay 42. Further, the second low side switch 322 is interconnected between the second input node 32 and the second output node 36 of the battery actuator control unit 30 and is configured to selectively apply the potential of the second stack node 12 as second switch signal RLY2- to the second battery actuator relay 42.

Finally, the third high side switch 313 is interconnected between the first input node 31 and the first output node 35 of the battery actuator control unit 30 and is configured to selectively apply the second output voltage VCC as first switch signal RLY3+ to the third (precharge) battery actuator relay 43. Further, the third low side switch 323 is interconnected between the second input node 32 and the second output node 36 of the battery actuator control unit 30 and is configured to selectively apply the potential of the second stack node 12 as second switch signal RLY3- to the third battery actuator relay 43.

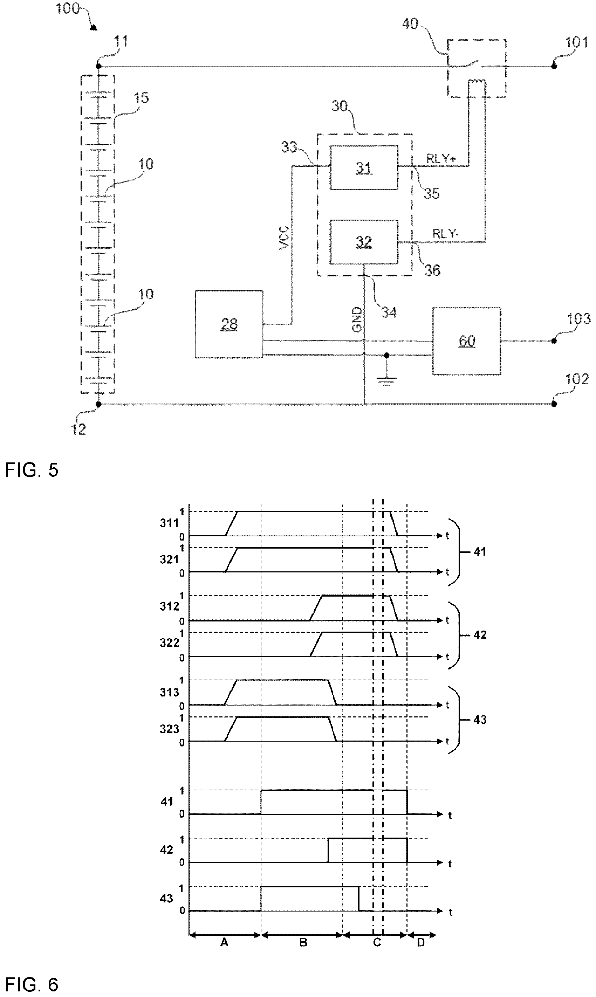

A timing diagram of the high side switches 311 to 313, the low side switches 321 to 323 and the respective battery actuator relays 41 to 43 is illustrated in Figure 6. The switching operations of high side switches 311 to 313 and low side switches 321 to 323 and thus the corresponding operations of the battery actuator relays 41 to 43 are controlled by the switch control circuit 37 as illustrated in Figure 4. Further, the timing diagram of Figure 6 illustrates four different operation phases of the battery system that are denoted with A, B, C, and D, respectively. Therein, operation phase A refers to a battery disconnected state, operation phase B refers to a pre-charging phase, operation phase C refers to a battery connected phase and operation phase D again refers to a battery disconnected phase.

During the initial battery disconnected phase A, an operation state of the first high side switch 311, the first low side switch 321, the third high side switch 313 and the third low side switch 323 are set from an operation state "0", i.e., non-conductive, to an operation state "1", i.e., conductive. Therein, the transition from state "0" to "1" itself requires some time, which is represented by the sloped transition in Figure 6. Subsequent and in reaction to setting the high side switches 311, 313 and the low side switches 321, 323 conductive, the first battery actuator relay 41 and the third battery actuator relay 43 are set conductive.

Thereby, a transition occurs from the operation phase A to the operation phase B, i.e., to a pre-charging phase. As shown in Figure 4, the second battery actuator relay 42 is connected in series with a precharge resistor 44 and hence a current via the second battery actuator relay 42 is limited by the precharge resistor 44. In the pre-charging phase B, a circuit capacity of a high voltage bus, e.g., of a vehicle, connected to the battery system 100 is charged. By pre-charging the circuit capacity, fusing of the actuator relays 41, 42 is avoided.

During the pre-charging phase B, the operation state of the second high side switch 312 and of the second low side switch 322 is set from an operation state "0", i.e., non-conductive, to an operation state "1", i.e., conductive. Again this transition is not immediate as illustrated by the sloped transition in Figure 6. Subsequent and in reaction to setting the second high side switch 312 and the second low side switches 322 conductive, the second battery actuator relay 42 is set conductive. Only after the second battery actuator relay 42 is set conductive, the operation state of the third high side switch 313 and of the third low side switch 323 is set from the operation state "1", i.e., conductive, to the operation state "0", i.e., non-conductive. Subsequent and in reaction to setting the third high side switch 313 and the third low side switches 323 non-conductive, the third battery actuator relay 43 is set non-conductive.

Thereby, a transition occurs from the operation phase B to the operation phase C, i.e., to a battery connected phase, wherein the battery system provides electric power to the system output nodes 101, 102 and a HV bus of a vehicle eventually connected thereto. By not setting the third battery actuator relay 43 non-conductive before the second battery actuator relay 42 is set conductive, a discharge of the circuit capacity mentioned above by a high demand load and thus fusing of the third battery actuator relay 43 can be effectively avoided. The battery connected phase C is maintained as long as power supply by battery system 100 is required.

If power supply of battery system 100 is not longer required, the operation state of the first high side switch 311, the second high side switch 312, the first low side switch 321 and the second low side switch 322 is set from the operation state "1", i.e., conductive, to the operation state "0", i.e., non-conductive. Subsequent and in reaction to setting the high side switches 311, 312 and the low side switches 321, 322 non-conductive, the first and second battery actuator relays 41, 42 are both set non-conductive and hence the battery cell stack 15 is disconnected from the first system output node 101 and from the second system output node 102.

Figure 5 illustrates a schematic circuit diagram of a battery system 100 according to another example, which is not covered by the appended claims. Therein, same elements are denoted by same reference signs as in the previously described embodiments and a repeated description is omitted. However, in the battery system 100 according to this example, a galvanically isolated DC/DC converter 28 is connected to a low voltage battery 60 and receives a battery voltage of the low voltage battery 60. Further, the galvanically isolated DC/DC converter 28 and the low voltage battery 60 are connected to the a low voltage ground of the low voltage battery 60, e.g., to a chassis of an electric vehicle comprising the battery system 100. According to this example, the galvanically isolated DC/DC converter 28 blocks any perturbations in the high voltage domain of the battery cell stack 15 to couple into the low voltage domain of the low voltage battery 60 via the battery actuator 40.

### Reference signs

- 10: battery cell
- 11: first stack node
- 12: second stack node
- 15: battery cell stack
- 20: DC/DC converter
- 21: first switch
- 22: second switch
- 23: inductance
- 25: converter node
- 26: converter output node
- 27: converter input node
- 28: galvanically isolated DC/DC converter
- 30: battery actuator control unit
- 31: high side driver
- 311: first high side switch
- 312: second high side switch
- 313: third high side switch
- 32: low side driver
- 321: first low side switch
- 322: second low side switch
- 323: third low side switch
- 33: first input node
- 34: second input node
- 35: first output node
- 36: second output node
- 37: switch control circuit
- 40: battery actuator
- 41: first main relay
- 42: second main relay
- 43: precharge relay
- 44: precharge resistor
- 100: battery system
- 101: first system output node
- 102: second system output node
- 103: low voltage node

## Claims

1. Battery system (100) for an electric vehicle, the battery system (100) comprising:
a battery cell stack (15) formed of a plurality of battery cells (10) connected between a first stack node (11) and a second stack node (12) and configured to supply a stack voltage to a first system output node (101) that is connected to the first stack node (11), wherein the second stack node (12) is at a ground voltage potential of the battery system (100), wherein the ground voltage potential of the battery system (100) is different from a low voltage ground potential of the electric vehicle, in particular the potential of the chassis of the vehicle;
a DC/DC converter (20) configured to receive a first output voltage of the battery cell stack (15) and to down-convert the received voltage to a second output voltage;
a battery actuator (40) interconnected between the battery cell stack (15) and one of the first system output node (101) and a second system output node (102) and configured to be controlled to be set either conductive or non-conductive; and
a battery actuator control unit (30) comprising a first input node (33) configured to receive the second output voltage and a second input node (34) connected to the second stack node (12), the battery actuator control unit (30) being configured to output, to the battery actuator (40) for controlling the battery actuator (40), a first switch signal via a first output node (35) and a second switch signal via a second output node (36), wherein the first switch signal is on the voltage level of the second output voltage and the second switch signal is on the voltage level of the second stack node (12).

2. Battery system (100) according to claim 1, further comprising a low voltage battery (60) that is configured to be charged by the second output voltage.

3. Battery system (100) according to claim 1 or 2, wherein the first output voltage is provided by a fraction (16) of the plurality of battery cells (10) of the battery cell stack (15).

4. Battery system (100) according to any one of the preceding claims, wherein the DC/DC converter (20) is one of a buck converter, a buck-boost-converter, a low-dropout regulator, a flyback converter, a forward converter and a push-pull-converter.

5. Battery system (100) according to any one of the preceding claims, wherein the DC/DC converter (20) comprises a first switch (21) and an inductance (23) connected in series between a converter input node (27) and a converter output node (26), a converter node (25) in between the first switch (21) and the inductance (23), and a second switch (22) connected between the second stack node (12) and the converter node (25).

6. Battery system (100) according to any one of the preceding claims, wherein the battery actuator control unit (30) comprises a high side driver (31) interconnected between the first input node (33) and the first output node (35) and a low side driver (32) interconnected between the second input node (34) and the second output node (36).

7. Battery system (100) according to any one of the preceding claims,
wherein the battery actuator (40) comprising:
a first battery actuator (41) interconnected between the first stack node (11) and the first system output node (101); and
a second battery actuator (42) interconnected between the second stack node (12) and the second system output node (102),
wherein each of the first battery actuator (41) and the second battery actuator (42) is connected to the first output node (35) and to the second output node (36).

8. Battery system (100) according to claim 7, further comprising:
a precharge battery actuator (43) connected in series with a precharge resistor (44),
wherein the precharge battery actuator (43) and the precharge resistor (44) are commonly connected in parallel to the second battery actuator (42), and
wherein the precharge battery actuator (43) is connected to the first output node (35) and to the second output node (36).

9. Battery system (100) according to one of claims 7 and 8,
wherein the high side driver (31) comprises a plurality of high side switches (311...313), each of the high side switches (311...313) being interconnected between the first input node (33) and one of a plurality of battery actuators (41, 42, 43), and
wherein the low side driver (32) comprises a plurality of low side switches (321...323), each of the low side switches (321... 323) being interconnected between the second input node (34) and one of the plurality of battery actuators (41, 42, 43).

10. Battery system (100) according to claim 9, further comprising a switch control circuit (37) configured for controlling the conductivity of each of the high side switches (311...313) and each of the low side switches (321... 323) individually.

11. Battery system (100) according to any one of the preceding claims, wherein each battery actuator (41, 42, 43) is one of a contactor and a relay.

12. Control unit (50) for a battery system (100) according to claim 1, the control unit (50) comprising the DC/DC converter (20) of claim 1 that is configured to receive a first output voltage of a battery cell stack (15) and to down-convert the received voltage to a second output voltage and the battery actuator control unit (30) of claim 1 that comprises a first input node (33) configured to receive the second output voltage and a second input node (34) connected to a second stack node (12) of the battery cell stack (15) being at a ground voltage potential of the battery system (100), wherein the ground voltage potential of the battery system (100) is different from a low voltage ground potential of the electric vehicle, in particular the potential of the chassis of the vehicle, and wherein the battery actuator control unit (30) is configured to output, to a battery actuator (40) for controlling the battery actuator (40), a first switch signal via a first output node (35) and a second switch signal via a second output node (36), wherein the first switch signal is on the voltage level of the second output voltage and the second switch signal is on the voltage level of the second stack node (12).

## Patentansprüche

1. Batteriesystem (100) für ein Elektrofahrzeug, wobei das Batteriesystem (100) Folgendes umfasst:
einen Batteriezellstapel (15), der aus einer Vielzahl von Batteriezellen (10) gebildet ist, die zwischen einem ersten Stapelknoten (11) und einem zweiten Stapelknoten (12) verbunden und dazu konfiguriert ist, eine Stapelspannung einem ersten Systemausgangsknoten (101) zuzuführen, der mit dem ersten Stapelknoten (11) verbunden ist, wobei der zweite Stapelknoten (12) auf einem Massespannungspotential des Batteriesystems (100) liegt, wobei sich das Massespannungspotential des Batteriesystems (100) von einem Niederspannungsmassepotential des Elektrofahrzeugs, insbesondere dem Potential des Fahrgestells des Fahrzeugs, unterscheidet;
einen DC/DC-Wandler (20), der dazu konfiguriert ist, eine erste Ausgangsspannung des Batteriezellstapels (15) zu empfangen und die empfangene Spannung auf eine zweite Ausgangsspannung herunterzuwandeln;
einen Batterieaktor (40), der zwischen dem Batteriezellstapel (15) und einem des ersten Systemausgangsknotens (101) und eines zweiten Systemausgangsknotens (102) verschaltet und dazu konfiguriert ist, gesteuert zu werden, um entweder leitfähig oder nichtleitfähig eingestellt zu werden; und
eine Batterieaktorsteuereinheit (30), die einen ersten Eingangsknoten (33), der dazu konfiguriert ist, die zweite Ausgangsspannung zu empfangen, und einen zweiten Eingangsknoten (34) umfasst, der mit dem zweiten Stapelknoten (12) verbunden ist, wobei die Batterieaktorsteuereinheit (30) dazu konfiguriert ist, an den Batterieaktor (40) zum Steuern des Batterieaktors (40) ein erstes Schaltsignal über einen ersten Ausgangsknoten (35) und ein zweites Schaltsignal über einen zweiten Ausgangsknoten (36) auszugeben, wobei das erste Schaltsignal auf dem Spannungsniveau der zweiten Ausgangsspannung liegt und das zweite Schaltsignal auf dem Spannungsniveau des zweiten Stapelknotens (12) liegt.

2. Batteriesystem (100) nach Anspruch 1, ferner umfassend eine Niederspannungsbatterie (60), die dazu konfiguriert ist, durch die zweite Ausgangsspannung aufgeladen zu werden.

3. Batteriesystem (100) nach Anspruch 1 oder 2, wobei die erste Ausgangsspannung durch einen Bruchteil (16) der Vielzahl von Batteriezellen (10) des Batteriezellstapels (15) bereitgestellt wird.

4. Batteriesystem (100) nach einem der vorhergehenden Ansprüche, wobei der DC/DC-Wandler (20) einer von einem Abwärtswandler, einem Ab-/Aufwärtswandler, einem Low-Dropout-Spannungsregler, einem Sperrwandler, einem Eintaktflusswandler und einem Gegentaktflusswandler ist.

5. Batteriesystem (100) nach einem der vorhergehenden Ansprüche, wobei der DC/DC-Wandler (20) einen ersten Schalter (21) und eine Induktivität (23), die in Reihe zwischen einem Wandlereingangsknoten (27) und einem Wandlerausgangsknoten (26) geschaltet sind, einen Wandlerknoten (25) zwischen dem ersten Schalter (21) und der Induktivität (23) und einen zweiten Schalter (22) umfasst, der zwischen dem zweiten Stapelknoten (12) und dem Wandlerknoten (25) geschaltet ist.

6. Batteriesystem (100) nach einem der vorhergehenden Ansprüche, wobei die Batterieaktorsteuereinheit (30) einen High-Side-Treiber (31), der zwischen dem ersten Eingangsknoten (33) und dem ersten Ausgangsknoten (35) verschaltet ist, und einen Low-Side-Treiber (32) umfasst, der zwischen dem zweiten Eingangsknoten (34) und dem zweiten Ausgangsknoten (36) verschaltet ist.

7. Batteriesystem (100) nach einem der vorhergehenden Ansprüche,
wobei der Batterieaktor (40) Folgendes umfasst:
einen ersten Batterieaktor (41), der zwischen dem ersten Stapelknoten (11) und dem ersten Systemausgangsknoten (101) verschaltet ist; und
einen zweiten Batterieaktor (42), der zwischen dem zweiten Stapelknoten (12) und dem zweiten Systemausgangsknoten (102) verschaltet ist,
wobei jeder des ersten Batterieaktors (41) und des zweiten Batterieaktors (42) mit dem ersten Ausgangsknoten (35) und mit dem zweiten Ausgangsknoten (36) verbunden ist.

8. Batteriesystem (100) nach Anspruch 7, ferner umfassend:
einen Vorladebatterieaktor (43), der in Reihe mit einem Vorladewiderstand (44) geschaltet ist,
wobei der Vorladebatterieaktor (43) und der Vorladewiderstand (44) gemeinsam parallel zu dem zweiten Batterieaktor (42) geschaltet sind und
wobei der Vorladebatterieaktor (43) mit dem ersten Ausgangsknoten (35) und mit dem zweiten Ausgangsknoten (36) verbunden ist.

9. Batteriesystem (100) nach einem der Ansprüche 7 und 8,
wobei der High-Side-Treiber (31) eine Vielzahl von High-Side-Schaltern (311...313) umfasst, wobei jeder der High-Side-Schalter (311...313) zwischen dem ersten Eingangsknoten (33) und einem einer Vielzahl von Batterieaktoren (41, 42, 43) verschaltet ist, und
wobei der Low-Side-Treiber (32) eine Vielzahl von Low-Side-Schaltern (321...323) umfasst, wobei jeder der Low-Side-Schalter (321...323) zwischen dem zweiten Eingangsknoten (34) und einem der Vielzahl von Batterieaktoren (41, 42, 43) verschaltet ist.

10. Batteriesystem (100) nach Anspruch 9, ferner umfassend eine Schaltersteuerschaltung (37), die zum individuellen Steuern der Leitfähigkeit jedes der High-Side-Schalter (311...313) und jedes der Low-Side-Schalter (321...323) konfiguriert ist.

11. Batteriesystem (100) nach einem der vorhergehenden Ansprüche, wobei jeder Batterieaktor (41, 42, 43) eines von einem Schütz und einem Relais ist.

12. Steuereinheit (50) für ein Batteriesystem (100) nach Anspruch 1, wobei die Steuereinheit (50) den DC/DC-Wandler (20) nach Anspruch 1, der dazu konfiguriert ist, eine erste Ausgangsspannung eines Batteriezellstapels (15) zu empfangen und die empfangene Spannung auf eine zweite Ausgangsspannung herunterzuwandeln, und die Batterieaktorsteuereinheit (30) nach Anspruch 1 umfasst, die einen ersten Eingangsknoten (33), der dazu konfiguriert ist, die zweite Ausgangsspannung zu empfangen, und einen zweiten Eingangsknoten (34) umfasst, der mit einem zweiten Stapelknoten (12) des Batteriezellstapels (15) verbunden ist, der auf einem Massespannungspotential des Batteriesystems (100) liegt, wobei sich das Massespannungspotential des Batteriesystems (100) von einem Niederspannungsmassepotential des Elektrofahrzeugs, insbesondere dem Potential des Fahrgestells des Fahrzeugs, unterscheidet und wobei die Batterieaktorsteuereinheit (30) dazu konfiguriert ist, an einen Batterieaktor (40) zum Steuern des Batterieaktors (40) ein erstes Schaltsignal über einen ersten Ausgangsknoten (35) und ein zweites Schaltsignal über einen zweiten Ausgangsknoten (36) auszugeben, wobei das erste Schaltsignal auf dem Spannungsniveau der zweiten Ausgangsspannung liegt und das zweite Schaltsignal auf dem Spannungsniveau des zweiten Stapelknotens (12) liegt.

## Revendications

1. Système de batterie (100) pour un véhicule électrique, le système de batterie (100) comportant :
un empilement d'éléments de batterie (15) formé d'une pluralité d'éléments de batterie (10) connectés entre un premier nœud d'empilement (11) et un deuxième nœud d'empilement (12) et configuré pour fournir une tension d'empilement à un premier nœud de sortie de système (101) qui est connecté au premier nœud d'empilement (11), dans lequel le deuxième nœud d'empilement (12) est à un potentiel de tension de masse du système de batterie (100), dans lequel le potentiel de tension de masse du système de batterie (100) est différent d'un potentiel de masse de basse tension du véhicule électrique, en particulier le potentiel du châssis du véhicule ;
un convertisseur CC/CC (20) configuré pour recevoir une première tension de sortie de l'empilement d'éléments de batterie (15) et pour convertir à la baisse la tension reçue en une deuxième tension de sortie ;
un actionneur de batterie (40) interconnecté entre l'empilement d'éléments de batterie (15) et l'un parmi le premier nœud de sortie de système (101) et un deuxième nœud de sortie de système (102) et configuré pour être commandé afin d'être réglé comme conducteur ou non conducteur ; et
une unité de commande d'actionneur de batterie (30) comportant un premier nœud d'entrée (33) configuré pour recevoir la deuxième tension de sortie et un deuxième nœud d'entrée (34) connecté au deuxième nœud d'empilement (12), l'unité de commande d'actionneur de batterie (30) étant configurée pour émettre, vers l'actionneur de batterie (40) pour commander l'actionneur de batterie (40), un premier signal de commutation via un premier nœud de sortie (35) et un deuxième signal de commutation via un deuxième nœud de sortie (36), dans lequel le premier signal de commutation est au niveau de tension de la deuxième tension de sortie et le deuxième signal de commutation est au niveau de tension du deuxième nœud d'empilement (12).

2. Système de batterie (100) selon la revendication 1, comportant en outre une batterie basse tension (60) qui est configurée pour être chargée par la deuxième tension de sortie.

3. Système de batterie (100) selon la revendication 1 ou 2, dans lequel
la première tension de sortie est fournie par une fraction (16) de la pluralité d'éléments de batterie (10) de l'empilement d'éléments de batterie (15).

4. Système de batterie (100) selon l'une quelconque des revendications précédentes, dans lequel le convertisseur CC/CC (20) est l'un parmi un convertisseur abaisseur, un convertisseur abaisseur-élévateur, un régulateur de tension à chute faible, un convertisseur à transfert indirect, un convertisseur avant et un convertisseur symétrique.

5. Système de batterie (100) selon l'une quelconque des revendications précédentes, dans lequel le convertisseur CC/CC (20) comporte un premier commutateur (21) et une inductance (23) connectés en série entre un nœud d'entrée de convertisseur (27) et un nœud de sortie de convertisseur (26), un nœud de convertisseur (25) entre le premier commutateur (21) et l'inductance (23), et un deuxième commutateur (22) connecté entre le deuxième nœud d'empilement (12) et le nœud de convertisseur (25).

6. Système de batterie (100) selon l'une quelconque des revendications précédentes, dans lequel l'unité de commande d'actionneur de batterie (30) comporte un circuit d'attaque côté haut (31) interconnecté entre le premier nœud d'entrée (33) et le premier nœud de sortie (35) et un circuit d'attaque côté bas (32) interconnecté entre le deuxième nœud d'entrée (34) et le deuxième nœud de sortie (36).

7. Système de batterie (100) selon l'une quelconque des revendications précédentes,
dans lequel l'actionneur de batterie (40) comporte :
un premier actionneur de batterie (41) interconnecté entre le premier nœud d'empilement (11) et le premier nœud de sortie de système (101) ; et
un deuxième actionneur de batterie (42) interconnecté entre le deuxième nœud d'empilement (12) et le deuxième nœud de sortie de système (102),
dans lequel chacun du premier actionneur de batterie (41) et du deuxième actionneur de batterie (42) est connecté au premier nœud de sortie (35) et au deuxième nœud de sortie (36).

8. Système de batterie (100) selon la revendication 7, comportant en outre :
un actionneur de batterie de précharge (43) connecté en série avec une résistance de précharge (44),
dans lequel l'actionneur de batterie de précharge (43) et la résistance de précharge (44) sont communément connectés en parallèle au deuxième actionneur de batterie (42), et
dans lequel l'actionneur de batterie de précharge (43) est connecté au premier nœud de sortie (35) et au deuxième nœud de sortie (36).

9. Système de batterie (100) selon l'une des revendications 7 et 8, dans lequel le circuit d'attaque côté haut (31) comporte une pluralité de commutateurs côté haut (311...313), chacun des commutateurs côté haut (311...313) étant interconnecté entre le premier nœud d'entrée (33) et l'un parmi une pluralité d'actionneurs de batterie (41, 42, 43), et
dans lequel le circuit d'attaque côté bas (32) comporte une pluralité de commutateurs côté bas (321...323), chacun des commutateurs côté bas (321...323) étant interconnecté entre le deuxième nœud d'entrée (34) et l'un de la pluralité d'actionneurs de batterie (41, 42, 43).

10. Système de batterie (100) selon la revendication 9, comportant en outre un circuit de commande de commutateur (37) configuré pour commander individuellement la conductivité de chacun des commutateurs côté haut (311...313) et de chacun des commutateurs côté bas (321...323).

11. Système de batterie (100) selon l'une quelconque des revendications précédentes, dans lequel chaque actionneur de batterie (41, 42, 43) est l'un parmi un contacteur et un relais.

12. Unité de commande (50) pour un système de batterie (100) selon la revendication 1, l'unité de commande (50) comportant le convertisseur CC/CC (20) selon la revendication 1 qui est configuré pour recevoir une première tension de sortie d'un empilement d'éléments de batterie (15) et pour convertir à la baisse la tension reçue en une deuxième tension de sortie et l'unité de commande d'actionneur de batterie (30) selon la revendication 1 qui comporte
un premier nœud d'entrée (33) configuré pour recevoir la deuxième tension de sortie et un deuxième nœud d'entrée (34) connecté à un deuxième nœud d'empilement (12) de l'empilement d'éléments de batterie (15) étant à un potentiel de tension de masse du système de batterie (100), dans lequel le potentiel de tension de masse du système de batterie (100) est différent d'un potentiel de masse de basse tension du véhicule électrique, en particulier le potentiel du châssis du véhicule, et dans lequel l'unité de commande d'actionneur de batterie (30) est configurée pour émettre, vers un actionneur de batterie (40) pour commander l'actionneur de batterie (40), un premier signal de commutation via un premier nœud de sortie (35) et un deuxième signal de commutation via un deuxième nœud de sortie (36), dans lequel le premier signal de commutation est au niveau de tension de la deuxième tension de sortie et le deuxième signal de commutation est au niveau de tension du deuxième nœud d'empilement (12).
